# FASCICULE DE BREVET EUROPEEN

(11) **EP 0 660 739 B1**
(45) Date de publication et mention de la délivrance du brevet: **01.04.1998**
(21) Numéro de dépôt: 93916013.1
(22) Date de dépôt: 20.07.1993
(51) Int. Cl.: A63B 53/04, B29C 45/44

(54) **TETE DE CLUB DE GOLF FABRIQUEE PAR INJECTION PLASTIQUE COMPRENANT DES INSERTS POSITIONNES PAR NOYAU FUSIBLE**
SPRITZGEGOSSENER GOLFSCHLÄGERKOPF MIT DURCH SCHMELZBAREM KERN POSITIONIERTEN EINSATZSTÜCKEN
GOLF CLUB HEAD MANUFACTURATED BY INJECTION AND COMPRISING INSERTS POSITIONED BY MEANS OF A FUSIBLE CORE

(30) Priorité: 18.09.1992 FR 9211289
(43) Date de publication de la demande: 05.07.1995
(73) Titulaire: Taylor Made Golf Company, Inc., Carlsbad, CA 92009 (US)
(72) Inventeur: VINCENT, Benoît, F-74940 Annecy-le-Vieux (FR); RIGAL, Jean-Pierre, F-74330 La-Balme-de-Sillingy (FR)
(74) Mandataire: Turlèque, Clotilde
(86) Numéro de dépôt international: FR9300733
(87) Numéro de publication internationale: WO9406519

(56) Documents cités:
- EP-A- 0 433 000
- EP-A- 0 470 488
- GB-A- 2 128 539
- GB-A- 2 173 146
- GB-A- 2 173 407
- US-A- 4 581 190
- US-A- 4 930 781
- US-A- 5 000 454
- PATENT ABSTRACTS OF JAPAN no. 16509 (C-0997)21 Octobre 1992 & JP,A,4 189 373 (MIZUNO CORP ET AL.) 7 July 1992

## Description

La présente invention est relative à un procédé de fabrication d'une tête perfectionnée de club de golf. Elle concerne aussi la tête ainsi perfectionnée.

Lors de la pratique du jeu de golf, le joueur frappe sa balle pour la déplacer, en la propulsant avec un outil dénommé club de golf qui est constitué par un manche, appelé communément par son terne anglais "shaft" qui comprend à son extrémité inférieure une tête, tandis que son extrémité supérieure est équipée d'une poignée appelée souvent par son terme anglais "grip".

Pour jouer au golf, le joueur dispose d'un certain nombre de clubs, tous différents les uns et des autres et qui sont généralement classés en trois catégories, les bois, les fers et les putters.

Actuellement, les clubs utilisés par les joueurs de golf au départ du "tee" ou zone de départ pour porter la balle pour les longues distances, sont appelés les "bois", et chaque constructeur donne à ses produits une structure spécifique, tout en respectant un certain nombre de règles nécessaires pour l'homologation de ceux-ci en compétition. Ainsi, certaines dimensions, inclinaisons et masses sont imposées, tandis qu'un grand nombre d'autres paramètres sont totalement libres, et c'est pourquoi il existe une grande diversité de produits de conceptions différentes. Au cours du jeu, les joueurs utilisent d'autres clubs appelés "fers" qui subissent les mêmes types de règles.

Dans les jeux de golf, la précision des coups est fonction d'un certain nombre de paramètres et notamment des paramètres humains, mais aussi des paramètres liés à la construction même du club, et notamment de la répartition de ses masses et de sa structure. Le mouvement avant de frappe peut être plus ou moins précis et la position de la tête du club lors de l'impact peut être plus ou moins bonne par rapport à la balle. Et les joueurs de golf savent bien que la moindre imprécision au moment de la frappe de la balle est lourde de conséquences. En effet, au moment de l'impact, le point d'impact de la balle sur la face de frappe doit se trouver parfaitement sur la droite, joignant le centre de gravité de la balle et le centre de gravité de la tête du club. Si cette condition n'est pas respectée lors du choc, la tête du club, sous l'effet de l'impact, pivotera et la face de frappe s'ouvrira ou se fermera et la trajectoire de la balle ne sera pas celle souhaitée. Si la face de frappe s'ouvre fortement, la balle ira à droite et si la face de frappe se ferme, la balle ira à gauche. Les têtes de club actuelles sont très peu tolérantes à ce sujet et il est nécessaire de frapper les balles avec beaucoup de précision.

Les clubs de golf au départ du trou comprennent généralement une tête métallique, de fine épaisseur, creuse et constituée par l'assemblage de plusieurs pièces de métal soudées les unes aux autres et définissant une cavité interne fermée. De telles constructions, décrites dans les documents US n° 4,438,931, 5,024,437 ou JP 61-33973, permettent d'obtenir des clubs dont la tolérance ne peut pas être améliorée au delà d'un certain seuil en raison de la masse critique de la tête et du caractère isotrope du matériau. En effet, aucune addition de masselotte n'est généralement possible sans dépasser la masse limite au delà de laquelle l'équilibrage du club ne peut plus être réalisé correctement et la répartition de la masse est étroitement liée à la forme même de la tête. Un autre inconvénient de ce type de tête concerne la nature du matériau de la face d'impact, qui si il permet une transmission directe des informations au joueur, en revanche confère des sensations et un son désagréables à l'impact.

Depuis quelques années sont apparues des têtes réalisées intégralement en matériau composite, à l'exception de la semelle. Les constructions ainsi présentées sont très peu jouées par les joueurs professionnels, car elles sont, le plus souvent, réalisées en une seule pièce, par le procédé de compression moulage, généralement sans souci particulier de répartition des masses. De plus, de telles constructions ne procurent pas au joueur de bonnes sensations à l'impact en raison de l'épaisseur importante de graphite de la paroi avant, nécessaire pour assurer la résistance.

Une tête réalisée en matière plastique est divulguée dans le document GB-A-2 128 539. Cette tête est faite d'une seule pièce thermoplastique injectée dans un moule autour d'un noyau fusible. La tête obtenue ne permet pas un bon contrôle des trajectoires de balles car le problème de l'équilibrage du club n'est pas résolu.

Le document US-A-5,000,454 divulgue une tête faite d'une matière plastique renforcée et comprenant une pièce servant à la fois de renfort de la face de frappe et de poids d'équilibrage. Cependant, une telle structure ne permet pas, encore, d'obtenir un bon équilibrage du club.

Le document WO 93/19816 (publié le 14.10.93) divulgue une tête qui comprend d'une part, un sous-ensemble interne constitué par l'assemblage d'une coque interne et d'un élément d'obturation de la coque interne, et d'autre part une enveloppe externe recouvrant au moins partiellement le sous-ensemble.

La tête selon WO 93/19816 peut comprendre une ou plusieurs masses additionnelles. Cependant, cette structure ne résoud pas non plus le problème de l'équilibrage du club.

La présente invention veut résoudre les inconvénients liés à la structure traditionnelle des têtes de club et propose une nouvelle conception de tête ainsi qu'un nouveau procédé de fabrication de celle-ci.

Ainsi l'un des objets de l'invention est de proposer un procédé de fabrication permettant d'obtenir une nouvelle structure de tête plus performante, en particulier, en terme de répartition des masses, de durabilité et de qualité de finition. Le procédé selon l'invention est particulièrement adapté à la réalisation en un minimum d'opérations de pièces en grandes séries.

Ainsi, selon l'invention, le procédé de fabrication d'une tête de club de golf comprend une coque périphérique constituée d'un ensemble de parois ; réalisée par injection d'une matière plastique, formant une cavité interne renfermant au moins un insert intérieur maintenu, immobilisé par enrobage partiel de matière plastique de la coque, préalablement à l'étape d'injection de la coque, on dispose et on immobilise dans le moule un ensemble comprenant un noyau fusible réalisé dans un deuxième matériau à point de fusion inférieur au point de fusion de ladite matière plastique et ledit insert solidaire dudit noyau fusible ; ensuite, on procède à l'injection de la matière plastique dans l'espace laissé libre entre les parois du moule et l'ensemble de façon à enrober le noyau fusible et tout ou partie de la partie libre dudit insert ; enfin, on procède à l'élimination de tout ou partie du noyau fusible pour permettre de libérer un volume interne pour former la cavité interne.

Selon une caractéristique complémentaire, la partie libre dudit insert comprend un épaulement ou une saillie permettant de favoriser la solidarisation de l'insert par la matière plastique injectée de la coque.

Selon une caractéristique de l'invention, l'insert est une pièce de résistance comprenant une paroi de résistance solidarisée sur la face avant du noyau fusible avant l'opération d'injection de façon à renforcer principalement la paroi avant de la coque, après l'opération d'injection.

Selon une autre caractéristique de l'invention, l'insert est une masselotte solidarisée sur l'une des faces du noyau fusible avant l'opération d'injection, de façon à être rendue solidaire de l'une des parois de la coque après l'opération d'injection.

Selon une caractéristique secondaire, le noyau fusible comprend au moins un logement dans lequel est retenue ladite masselotte, ledit logement ayant des dimensions supérieures à celles de la masselotte au moins par endroits, pour qu'il y ait un espace entre ladite masselotte et les parois du logement, destiné à être rempli par la première matière plastique lors de l'étape d'injection.

Selon une caractéristique additionnelle, dans une étape complémentaire, on coule dans la cavité interne laissée libre, un matériau de remplissage de faible densité.

Selon d'autres aspects du procédé, dans une phase préliminaire, on réalise une pièce de résistance qui est placée dans le moule avant l'étape d'injection. Ladite pièce étant métallique ou en résine chargée par exemple de fibres de verre ou autres.

Selon une autre caractéristique, le noyau fusible est par exemple réalisé en alliage d'étain, de plomb ou de bismuth, tandis que la coque est réalisée en matériau pouvant être mis en oeuvre par injection, tel que du polyamide, du polypropylène ou de l'ABS (Acrylonitrilebutadiènestyrène) renforcé ou non de fibres de verre ou de carbone.

L'invention concerne aussi une tête de club de golf selon les revendications 12 et 15, des formes de réalisation particulières étant données aux revendications 13, 14, 16-18.

D'autres caractéristiques et avantages de l'invention se dégageront de la description qui va suivre en regard des dessins annexés qui ne sont donnés qu'à titre d'exemples non limitatifs.

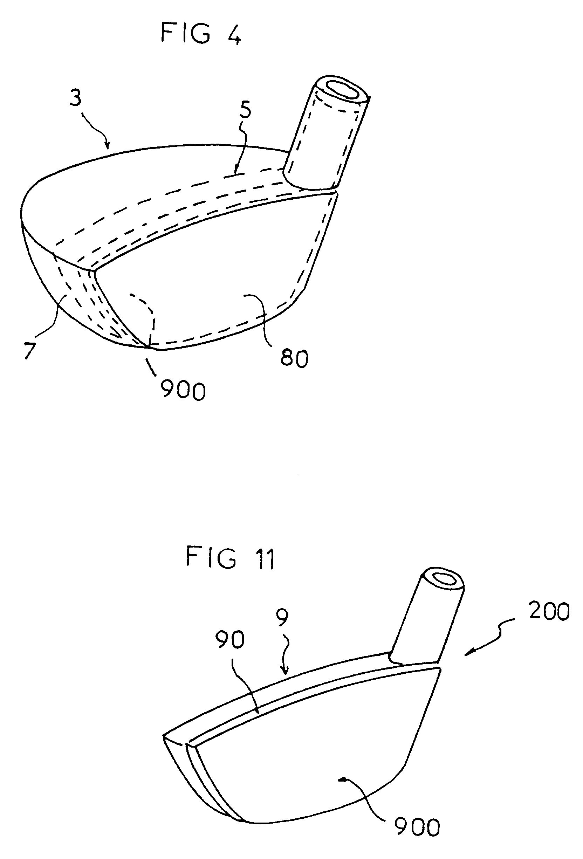

Les figures 1 à 4 illustrent la tête de club de golf selon l'invention,
La figure 1 est une vue de face de la tête,
La figure 2 est une vue latérale en coupe selon II-II,
La figure 3 est une vue de dessus avec coupe partielle,
La figure 4 est une vue en perspective,
Les figures 5 à 19 illustrent le procédé de fabrication selon l'invention,

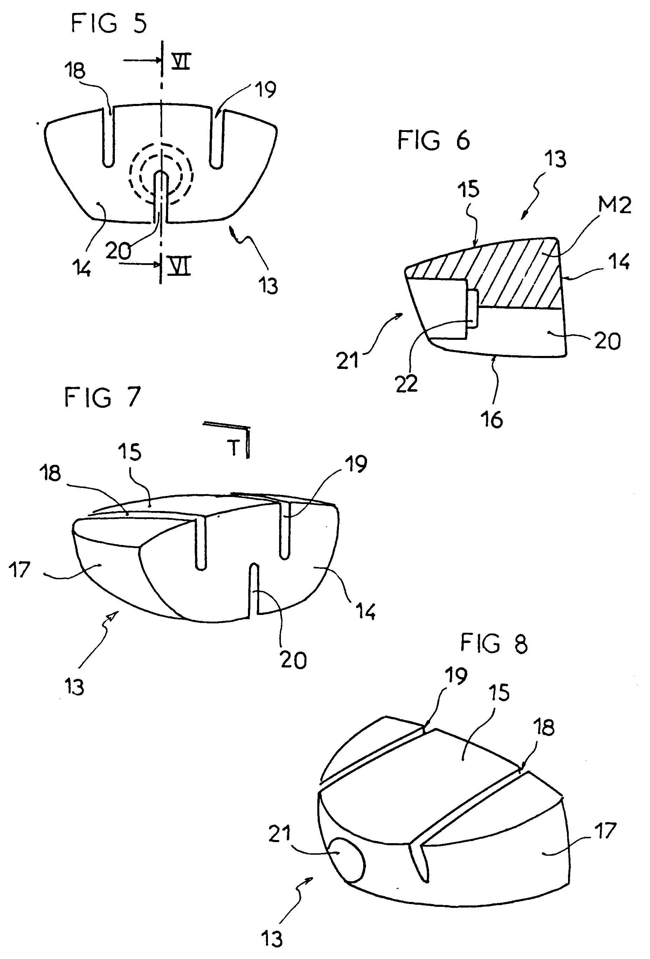

Les figures 5, 6, 7 et 8 représentent une phase préliminaire qui consiste à réaliser un insert fusible,
La figure 5 est une vue de face,
La figure 6 est une eue en coupe selon VI-VI,
Les figures 7 et 8 sont des vues en perspective, respectivement avant et arrière,

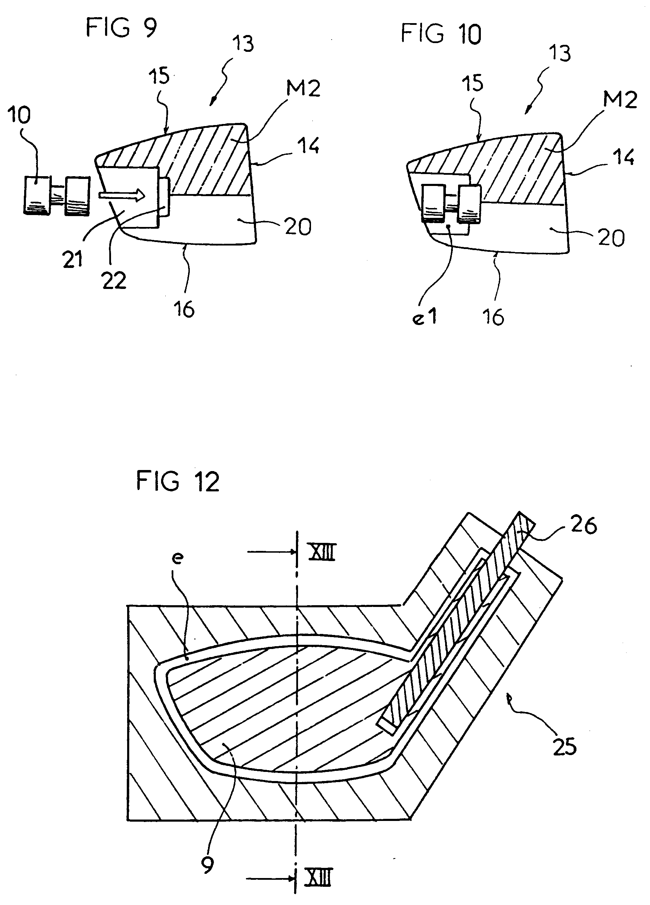

Les figures 9 et 10 illustrent schématiquement une étape intermédiaire,
La figure 11 illustre une autre phase préliminaire,
Les figures 12, 13 et 14 illustrent l'étape d'injection proprement dite,

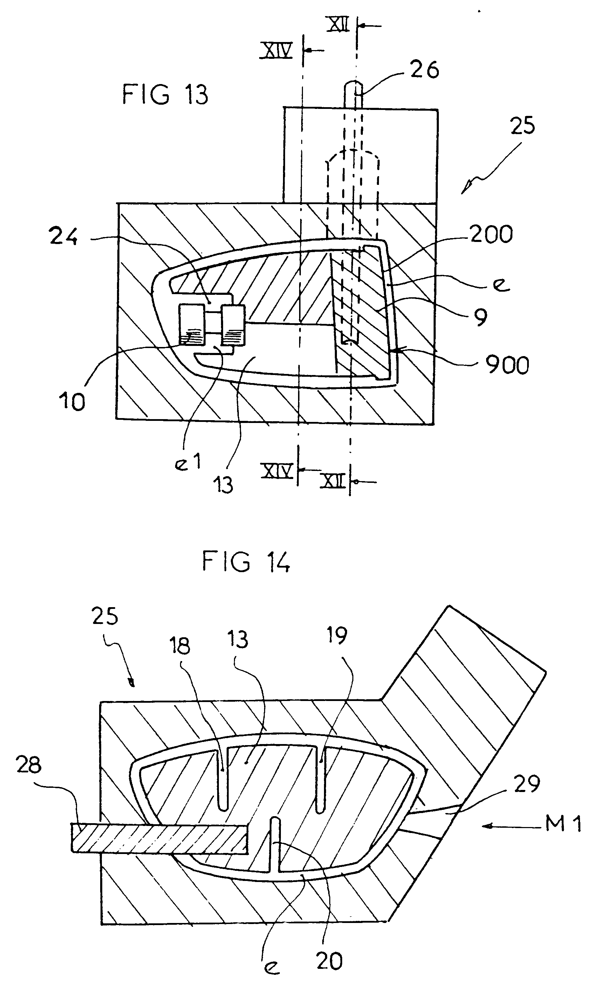

La figure 12 est une vue en coupe selon XII-XII de la figure 13,
La figure 13 est une vue en coupe selon XIII-XIII de la figure 12,
La figure 14 est une vue en coupe selon XIV-XIV de la figure 13,

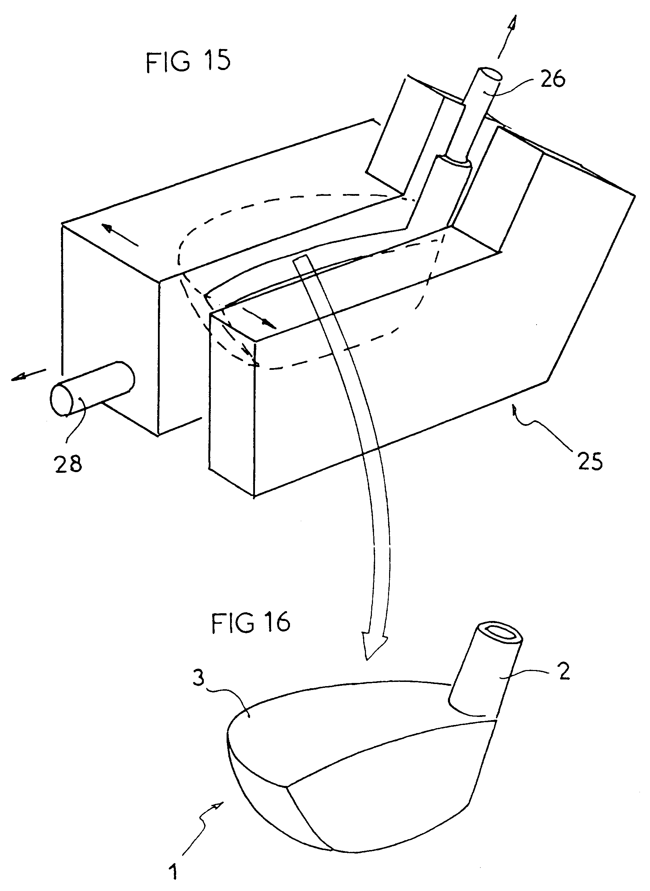

Les figures 15 et 16 représentent une première étape complémentaire,

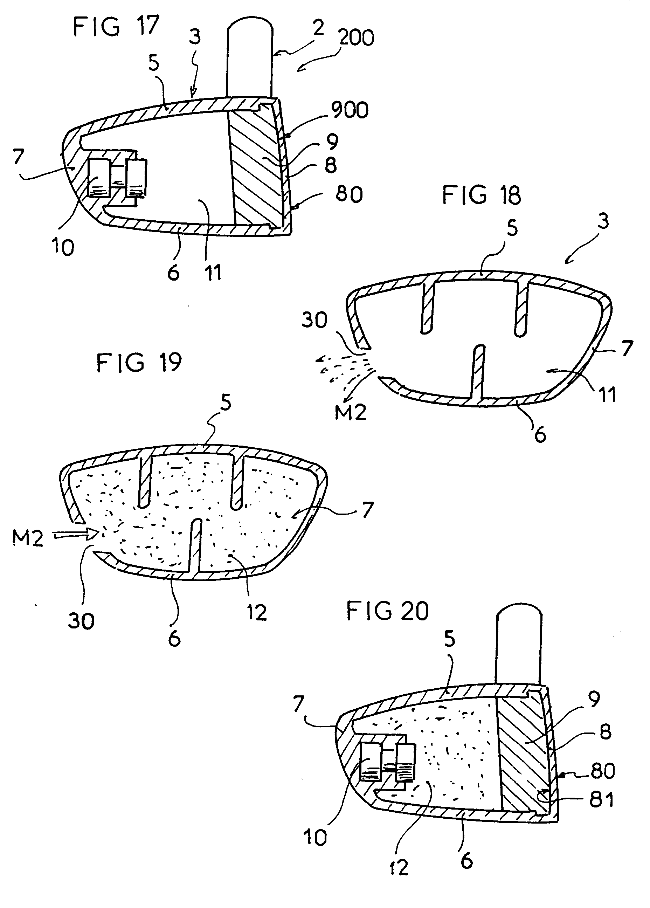

Les figures 17 et 18 illustrent une deuxième étape complémentaire,
Les figures 19 et 20 illustrent la troisième étape complémentaire d'injection de mousse,

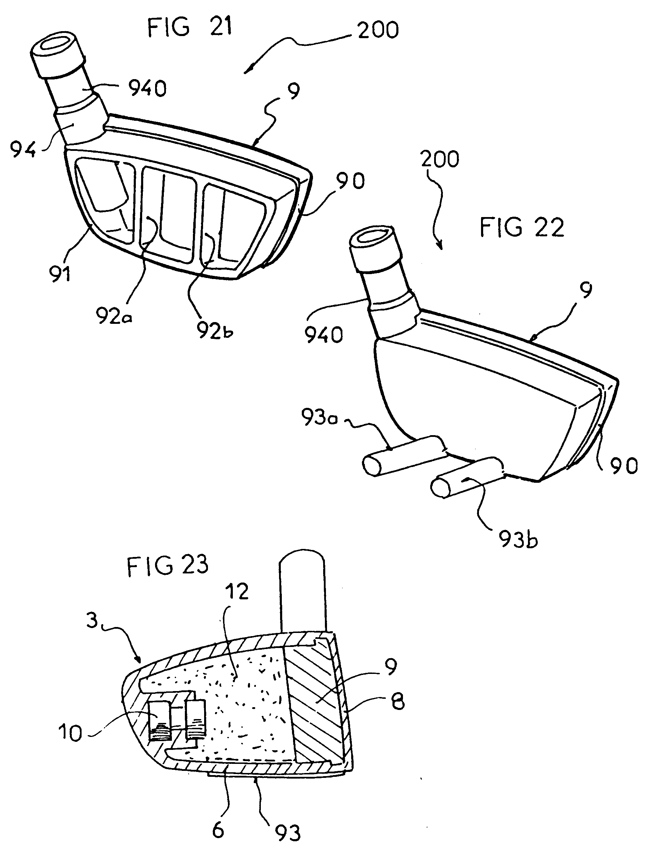

Les figures 21, 22 et 23 illustrent deux variantes de réalisation de la pièce de résistance,
La figure 21 est une perspective arrière d'une première variante,

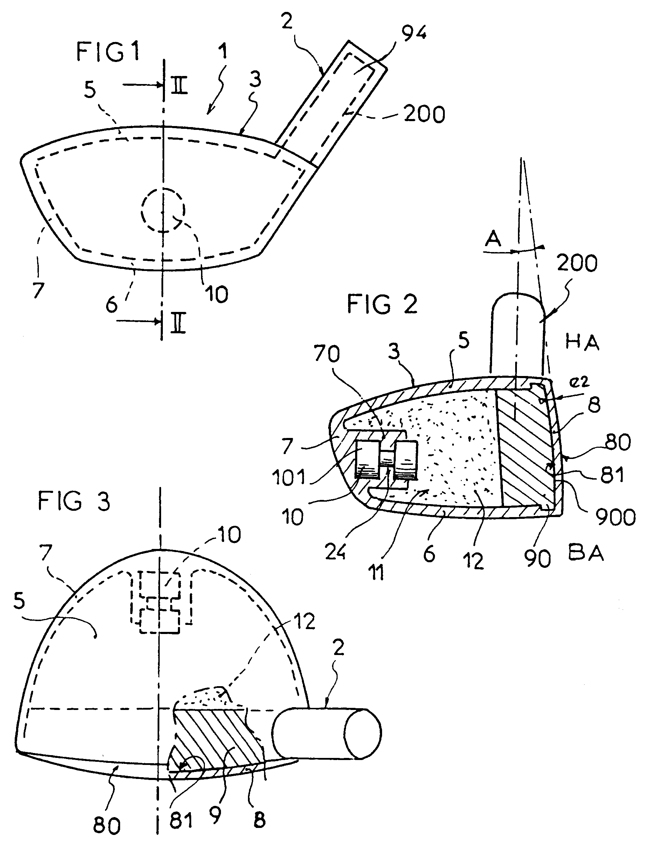

Les figures 22 et 23 illustrent une deuxième variante, la figure 22 étant une vue similaire à la figure 21, tandis que la figure 23 est une vue similaire à la figure 2,

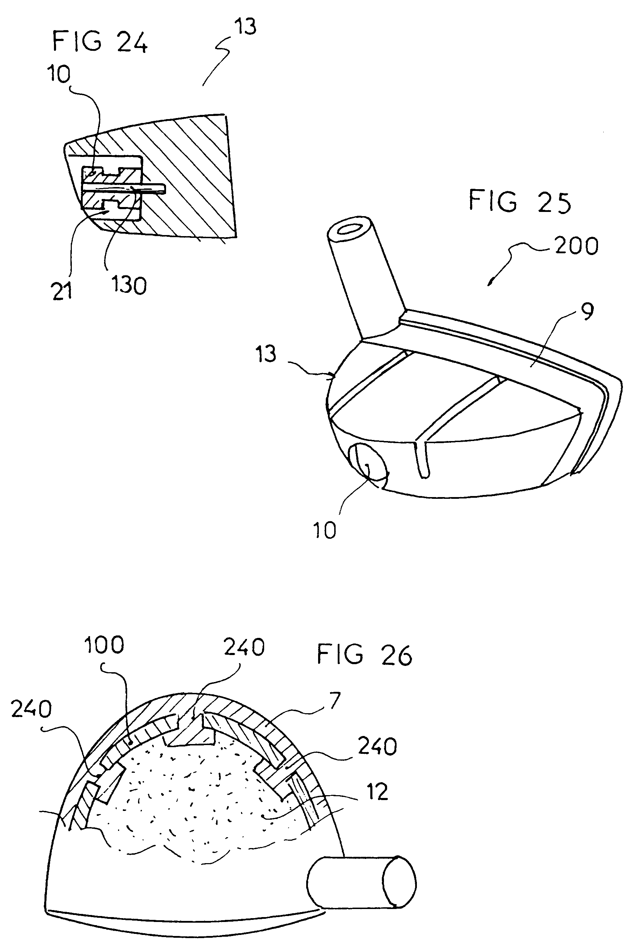

La figure 24 est une vue similaire à la figure 10, montrant une variante,
La figure 25 est une vue en perspective arrière montrant un autre mode d'exécution,
La figure 26 représente un autre mode d'exécution dans une vue de dessus avec coupe partielle,

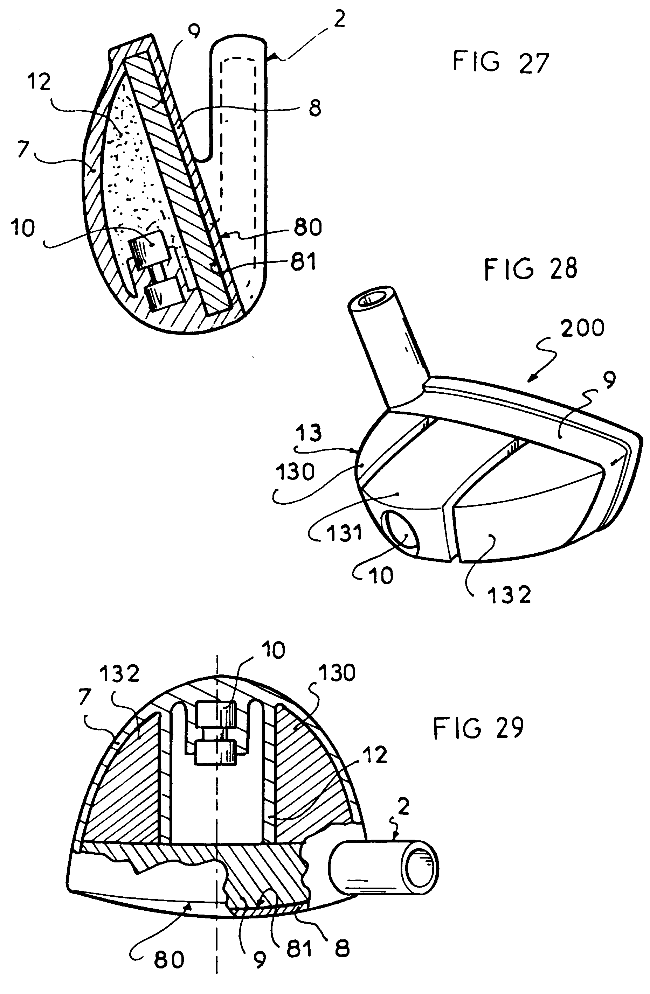

La figure 27 est une vue similaire à la figure 2, illustrant une tête d'un autre type, selon l'invention,
La figure 28 est une vue similaire à la figure 25 mais selon une variante,
La figure 29 est vue de dessus en coupe selon la variante de la figure 28.

Les figures 1 à 3 représentent une tête de club de golf réalisée par le procédé de l'invention. Elle est du type bois et comprend un corps de tête proprement dit (1) prolongée latéralement et vers le haut par un cou (2) destiné à recevoir, de façon connue, le manche du club (non représenté). Le corps de la tête proprement dit est constitué par une coque (3) formée par un ensemble de parois de faible épaisseur comprise entre 2 et 5 millimètres : une paroi supérieure (5), une paroi inférieure (6), une paroi périphérique (7) et une paroi avant (8) dont la face avant (80) constitue la face de frappe destinée à heurter la balle lors du coup. Par ailleurs, la face interne (81) de la paroi avant (8) est en appui sur la face avant (900) de la paroi de résistance (9). Selon l'invention telle qu'illustrée, la coque (3) est réalisée en matière plastique chargée ou non, du type thermoplastique injecté, tel qu'en polyamide, en polypropylène, en ABS (Acrylonitrilebutadiènestyrène). La coque (3) formant une enveloppe périphérique externe et constituant une cavité interne fermée (11) est avantageusement remplie d'un matériau de remplissage (12) tel qu'une mousse de faible densité et par exemple une mousse de polyuréthane.

Par ailleurs, la tête comprend une pièce de résistance (200), par exemple en aluminium à haut module, constituée par une paroi de résistance (9), et par une partie tubulaire latérale (94), de préférence en acier, et rapportée sur le côté de la paroi (9). Cette partie tubulaire constitue, en partie au moins, la structure rigide du cou (2) sur lequel est destiné à s'emmancher le manche du club. La paroi de résistance (9) a la forme générale de la face de frappe et comprend un épaulement ou rebord périphérique (90).

Selon une disposition avantageuse, la partie arrière de la tête proprement dite comprend une masselotte d'inertie (10) surmoulée dans la matière (70) constituant la paroi périphérique arrière (7). La masselotte (10) a la forme générale d'une pièce cylindrique comprenant une gorge (24) et est réalisée dans un matériau de densité importante, tels que du laiton, du bronze, acier ou autres.

L'invention concerne le procédé de réalisation de la tête telle que décrite précédemment, et qui comprend différentes phases successives. Ainsi, dans une étape préliminaire, on réalise un noyau (13) (figures 5, 6, 7, 8) avec un matériau (M2) à bas point de fusion et par exemple un noyau métallique tel qu'en alliage d'étain, de plomb et de bismuth. Ledit noyau (13) est réalisé par exemple par moulage et a la forme générale de la cavité interne (11). Ainsi, il comporte une face avant (14), une face supérieure (15), une face inférieure (16) et une face périphérique latérale (17). Il comporte avantageusement trois évidements longitudinaux verticaux (18, 19, 20) et selon une caractéristique complémentaire, un logement arrière (21) prolongé par un trou de retenue (22) destiné à retenir une masselotte (10) de forme générale par exemple cylindrique, réalisée dans un matériau de haute densité tel que du laiton ou du bronze. Il faut noter que le logement (21) a des dimensions, notamment des dimensions diamétrales, supérieures à celles de la masselotte (10) de façon à créer un espace (e1) entre les parois dudit logement et celles de la masselotte. Cet espace (e1) est destiné à se remplir de matière lors de l'injection de la coque, comme nous l'expliquerons plus loin dans la description.

Dans une étape intermédiaire, ladite masselotte est engagée dans le logement arrière (21) (figure 8) pour y être retenue dans le trou de retenue (22) (figure 9). Mais bien entendu, la masselotte pourrait être à tout autre endroit et notamment dessous, comme cela est représenté à la figure 27.

Dans une autre étape préliminaire (figure 11), on réalise la paroi de résistance (9) de la pièce (200), par exemple par moulage en aluminium. La paroi de résistance (9) ayant une face avant (900) et un rebord périphérique (90). L'épaisseur de la paroi de résistance (9) pouvant être par exemple de 4 à 6 millimètres. Elle peut être munie de nervures internes de renfort, comme cela est représenté à la figure 21. Bien entendu, la paroi peut être réalisée en toute autre matière appropriée, comme en matériau composite. De préférence, la pièce de résistance comprend une partie tubulaire (94) réalisée en acier qui est rapportée et soudée ou noyée à la paroi (9). De plus, la partie comprend un retreint (940) permettant de faciliter le pliage de la partie tubulaire pour pouvoir régler facilement l'angle de "lie" ou de "loft" de la tête.

Dans une étape préalable à l'injection de la coque (figures 12, 13), on place dans un moule d'injection (25), d'une part la pièce de résistance (200) et d'autre part, le noyau fusible (13) avec sa masselotte (10). La retenue de la pièce de résistance (200) dans le moule (25) étant assurée par une tige de retenue (26) engagée dans le trou (27) du cou (2), tandis que la retenue du noyau (13) dans le moule est assurée par un doigt transversal (28). Une fois que le moule est prêt avec la pièce de résistance (200) et le noyau fusible (13), on réalise l'injection de la coque (3) dans une étape principale (figure 14). Le matériau d'injection (M1) destiné à former la coque et à recouvrir l'insert (13) et la paroi de résistance (9) est injecté par le trou d'injection (29). La matière injectée (M1) prend alors place dans l'espace périphérique (e) laissé libre entre la paroi du moule et les éléments occupant l'intérieur de celui-ci, c'est-à-dire le noyau (13) et la paroi de résistance (9). Par ailleurs, ladite première matière (M1) prend place dans l'espace (e1) laissé libre entre la masselotte (10) et les parois du logement (21) pour prendre même place dans la gorge (24), assurant ainsi la retenue de ladite masselotte. Ainsi, celle-ci est retenue par la matière (M1) de la coque et plus particulièrement par une saillie (70) de la paroi périphérique (7). Lors de l'injection, la matière injectée (M1) prend aussi place dans les évidements longitudinaux (18, 19) du noyau, pour former avec les parois de la coque, des nervures de renfort. Notons aussi que le noyau fusible (13) est réalisé en matériau (M2) dont le point de fusion est inférieur au point de fusion du matériau (M1) dans lequel est réalisée la coque. De préférence, il s'agit d'un alliage à base d'alliage d'étain, de plomb et de bismuth. A titre d'exemple, la composition pondérale est la suivante : AS (traces); Sn = 15 à 20% ; Bi = 40 à 45% ; Pb = reste. La température de fusion de cet alliage est inférieure à 100°C. La température d'injection du matériau (M1) lorsqu'il s'agit d'un polyamide de type "Zytel" chargé est d'environ 280°C.

On constate aussi que la paroi avant (8) de la coque est en contact avec la paroi de résistance (9) et que le rebord périphérique (90) assure une bonne liaison entre ladite coque et la pièce de résistance (200).

Dans une première étape complémentaire, on ouvre le moule (figure 15) pour en sortir la tête du club ainsi formée (figure 15), tandis que dans une deuxième étape complémentaire (figures 17, 18), on chauffe ladite tête pour obtenir la fusion de l'insert fusible (13), et ainsi par élimination de la matière fondue, créer une cavité interne (11).

Dans une troisième étape complémentaire (figures 19, 20), on coule dans la cavité interne, un matériau (M3) de faible densité, tel que de la mousse de polyuréthane, pour former le remplissage (12) de la cavité. Le coulage se faisant par exemple par le trou (30) laissé par le doigt transversal (28) dans la paroi périphérique (7).

La figure 21 représente en perspective une première variante selon laquelle la face arrière de la paroi de résistance (9) comprend des nervures de renfort permettant de réduire l'épaisseur de la paroi et d'alléger substanciellement la pièce. Elle comprend par exemple une nervure périphérique (91) et deux nervures verticales (92a, 92b).

Les figures 22 et 23 représentent une deuxième variante selon laquelle la partie inférieure arrière de la paroi de résistance (9) comprend deux protubérances s'étendant parallèlement vers l'arrière pour faire saillie en partie au moins hors de la paroi inférieure (6) de la coque (3).

La figure 24 est une vue similaire à la figure 10, illustrant une variante selon laquelle la masselotte (10) est rendue solidaire du noyau (13) grâce à un axe de fixation (130).

Dans une variante du procédé, on pourrait aussi prévoir de solidariser la masselotte au noyau fusible, lors du moulage de celui-ci.

Il va de soi qu'avant sa mise en place dans le moule (25), le noyau (13) avec la masselotte (10) est solidaire de la paroi de résistance (9) pour constituer un sous-ensemble solidaire, comme cela est représenté à la figure 25. La solidarisation de l'insert (13) avec la pièce de résistance peut être réalisée par tous moyens appropriés et notamment par emboîtement, collage, soudage ou vissage.

Bien entendu, la masselotte (10) peut prendre toutes formes et toutes positions appropriées, sans pour autant sortir du cadre de l'invention. La figure 26 représente une variante dans une illustration en vue de dessus avec coupe partielle. Dans cette variante, la masselotte (10) est constituée par une paroi métallique périphérique (100) comprenant une succession de trous (240) permettant à la matière d'injection de l'enveloppe, d'y pénétrer et d'assurer la retenue de ladite masselotte.

L'invention n'est, bien entendu, pas limitée à une tête de club de golf du type "bois", mais pourrait très bien être de tout autre type, et notamment une tête du type "fer", comme cela est illustré à la figure 27. Pour la compréhension de cette illustration, les éléments similaires au mode de réalisation précédent portent les mêmes références et l'on voudra bien se reporter à la description correspondante.

Notons que l'épaisseur "e2" de la paroi avant (8) peut varier et notamment diminuer du bas (BA) vers le haut (HA) pour que la face de frappe (80) présente l'inclinaison générale "A" souhaitée. Ainsi, sur la base d'une pièce de résistance (200) commune, il peut être possible de mouler toute la série de têtes dont les faces de frappe présentent des inclinaisons différentes. Bien entendu, l'épaisseur "e2" peut varier horizontalement (figure 2).

Dans une variante, on pourrait prévoir aussi que la ou les masselottes soient retenues dans un ou des logements réalisés dans la paroi de résistance. La ou les masselottes peuvent être même fixées à la paroi par d'autres moyens, tels que par vissage ou collage.

La figure 28 illustre une variante dans laquelle, le noyau fusible de départ est constitué de plusieurs morceaux séparés (130, 131, 132).

Ainsi, seuls certains morceaux du noyau peuvent être éliminés après l'opération d'injection. Les autres morceaux peuvent servir de masselottes, localisées à des endroits déterminés et avantageux.

La figure 29 montre, par exemple, une tête selon l'invention dont seulement le morceau central a été éliminé. Les deux morceaux latéraux (130, 132) servent de masselottes dans le cadre d'une répartition latérale des masses de la tête connue en soi.

Bien entendu, l'invention n'est pas limitée aux modes de réalisation décrits et représentés à titre d'exemples, mais elle comprend aussi tous les équivalents techniques ainsi que leurs combinaisons, dans le cadre des revendications.

## Revendications

1. Procédé de fabrication d'une tête de club de golf comprenant une coque périphérique (3) constituée d'un ensemble de parois (5, 6, 7, 8) ; réalisée par injection d'une matière plastique (M1), formant une cavité interne (11) renfermant au moins un insert intérieur (10, 100, 200) maintenu immobilisé par enrobage partiel de matière plastique de la coque (3), dans lequel procédé, préalablement à l'étape d'injection de la coque (3), on dispose et on immobilise dans le moule un ensemble comprenant un noyau fusible (13) réalisé dans un deuxième matériau (M2) à point de fusion inférieur au point de fusion de ladite matière plastique (M1) et ledit insert (10, 100, 200) solidaire dudit noyau fusible (13) ; ensuite, on procède à l'injection de la matière plastique (M1) dans l'espace laissé libre entre les parois du moule et l'ensemble, de façon à enrober le noyau fusible (13) et tout ou partie de la partie libre dudit insert (10, 100, 200) ; enfin, on procède à l'élimination de tout ou partie du noyau fusible pour permettre de libérer un volume interne pour former la cavité interne (11).

2. Procédé de fabrication d'une tête de club de golf selon la revendication 1, caractérisé en ce que la partie libre dudit insert (10, 200) comprend un épaulement (90) ou une saillie (24) permettant de favoriser la solidarisation de l'insert par la matière plastique injectée (M1) de la coque (3).

3. Procédé de fabrication d'une tête de club de golf selon la revendication 1 ou 2, caractérisé en ce que l'insert est une pièce de résistance (200) comprenant une paroi de résistance (9) solidarisée sur la face avant (14) du noyau fusible (13) avant l'opération d'injection, de façon à renforcer principalement la paroi avant (8) de la coque (3), après l'opération d'injection.

4. Procédé de fabrication d'une tête de club de golf selon la revendication 1 ou 2, caractérisé en ce que l'insert est une masselotte (10, 100) solidarisée sur l'une des faces (14, 15, 16, 17) du noyau fusible (13) avant l'opération d'injection, de façon à être rendue solidaire de l'une des parois (5, 6, 7, 8) de la coque (3) après l'opération d'injection.

5. Procédé de fabrication d'une tête de club de golf selon la revendication 4, caractérisé en ce que le noyau fusible (13) comprend au moins un logement (21, 22) dans lequel est retenue ladite masselotte (10), ledit logement ayant des dimensions supérieures à celles de la masselotte (10) au moins par endroits, pour qu'il y ait un espace (e) entre ladite masselotte (10) et les parois du logement, destiné à être rempli par la première matière plastique (M1) lors de l'étape d'injection.

6. Procédé de fabrication d'une tête de club de golf selon l'une quelconque des revendications précédentes, caractérisé en ce que dans une étape complémentaire, on coule dans la cavité interne (11) laissée libre, un matériau de remplissage (12) de faible densité.

7. Procédé de fabrication d'une tête de club de golf selon l'une quelconque des revendications précédentes, caractérisé en ce que le noyau fusible est réalisé en alliage d'étain, de plomb et de bismuth.

8. Procédé de fabrication d'une tête de club de golf selon l'une quelconque des revendications précédentes, caractérisé en ce que la coque (3) est réalisée en matériau (M1) tel que du polyamide, du polypropylène ou de l'ABS (Acrylonitrilebutadiènestyrène).

9. Procédé de fabrication d'une tête de club de golf selon la revendication 4 ou 5, caractérisé en ce que la masselotte (10) est réalisée en laiton, en bronze ou en acier.

10. Procédé de fabrication d'une tête de club de golf selon l'une quelconque des revendications précédentes, caractérisé en ce que la pièce de résistance (200) comprend une paroi de résistance (9) et une partie (94) se prolongeant latéralement et formant en partie au moins le cou de la tête.

11. Procédé de fabrication d'une tête de club de golf selon la revendication 10, caractérisé en ce que la paroi de résistance (9) est réalisée par moulage en aluminium et la partie (94), en acier, est rapportée et soudée ou noyée à la paroi de résistance (9).

12. Tête de club de golf de préférence du type bois comprenant une coque périphérique (3) et un cou (2) s'étendant latéralement, la coque (3) étant formée par un ensemble de parois (5, 6, 7, 8) en matière plastique injectée de faible module : une paroi supérieure (5), une paroi inférieure (6), une paroi périphérique (7) et une paroi avant (8) formant la face de frappe (80) de la tête, la face interne de ladite paroi avant (8) étant en appui sur la face avant (900) d'une paroi de résistance interne (9) en matériau à haut module, la paroi de résistance étant une partie d'une pièce de résistance (200) qui se prolonge latéralement par une partie tubulaire (94) formant au moins en partie le cou (2) de la tête.

13. Tête de club de golf selon la revendication 12, caractérisée en ce que la pièce de résistance (200) est métallique ou en résine chargée de fibres de verre ou autres.

14. Tête de club de golf selon la revendication 13, caractérisée en ce que la paroi de résistance (9) est en aluminium et la partie tubulaire (94) est en acier.

15. Tête de club de golf de préférence du type bois comprenant une coque périphérique (3) et un cou (2) s'étendant latéralement, la coque (3) étant formée par un ensemble de parois (5, 6, 7, 8) en matière plastique injectée de faible module : une paroi supérieure (5), une paroi inférieure (6), une paroi périphérique (7) et une paroi avant (8) formant la face de frappe (80) de la tête, la face interne de ladite paroi avant (8) étant en appui sur la face avant (900) d'une paroi de résistance interne (9) en matériau à haut module, et une masselotte d'inertie (10) en matériau de forte densité étant retenue dans la cavité interne (11) par l'une des parois (5, 6, 7, 8).

16. Tête de club de golf selon la revendication 15, caractérisée en ce que la masselotte d'inertie (10) est retenue par la paroi périphérique (7) qui comprend une saillie de retenue (70) enveloppant au moins partiellement ladite masselotte.

17. Tête de club de golf selon l'une quelconque des revendications 12 à 16, caractérisée en ce la paroi de résistance (9) comprend au moins une protubérance (93a, 93b) faisant saillie en partie au moins hors de la paroi inférieure (6) de la coque (3).

18. Tête de club de golf selon l'une quelconque des revendications 12 à 17, caractérisée en ce que la coque (3) est en polyamide, en polypropylène ou en ABS.

## Claims

1. Process for manufacturing a golf club head comprising a peripheral shell (3) consisting of an assembly of walls (5,6,7,8); carried out by injecting a plastic material (M1), forming an internal cavity (11) enclosing at least one inner insert (10,100,200) kept immobilized by partially covering the shell (3) with plastic material, in which process, prior to the step of injecting the shell (3), there is disposed and immobilized in the mould an assembly comprising a fusible core (13) made of a second material (M2) with a melting point lower than the melting point of the said plastic material (M1) and the said insert (10,100,200) is fixed to the fusible core (13); the plastic material (M1) is then injected into the space left free between the walls of the mould and the assembly, so as to cover the fusible core (13) and all or part of the free part of the said insert (10,100,200); and finally all or part of the fusible core is removed to enable an internal volume to be freed so as to form the internal cavity (11).

2. Process for manufacturing a golf club head according to claim 1, characterized in that the free part of the said insert (10,200) includes a shoulder (90) or a projection (24) enabling the interlocking of the insert by the injected plastic material (M1) of the shell (3) to be encouraged.

3. Process for manufacturing a golf club head according to claim 1 or 2, characterized in that the insert is a reinforcing piece (200) comprising a reinforcing wall (9) fixed to the front face (14) of the fusible core (13) before the injection operation, so as to reinforce mainly the front wall (8) of the shell (3) after the injection operation.

4. Process for manufacturing a golf club head according to claim 1 or 2, characterized in that the insert is a balance weight (10,100) fixed to one of the faces (14,15,16,17) of the fusible core (13) before the injection operation, so as to be fixed to one of the walls (5,6,7,8) of the shell (3) after the injection operation.

5. Process for manufacturing a golf club head according to claim 4, characterized in that the fusible core (13) includes at least one housing (21,22) in which the said balance weight (10) is retained, the said housing having dimensions greater than those of the balance weight (10) at least in places, so that there is a space (e) between the said balance weight (10) and the walls of the housing, designed to be filled with the first plastic material (M1) during the injection step.

6. Process for manufacturing a golf club head according to any one of the preceding claims, characterized in that in a complementary step, a low density filling material (12) is cast into the internal cavity (11) which is left free.

7. Process for manufacturing a golf club head according to any one of the preceding claims, characterized in that the fusible core is made of an alloy of tin, lead and bismuth.

8. Process for manufacturing a golf club head according to any one of the preceding claims, characterized in that the shell (3) is made of a material (M1) such as polyamide, polypropylene or ABS (Acrylonitrilebutadienestyrene).

9. Process for manufacturing a golf club head according to claim 4 or 5, characterized in that the balance weight (10) is made of brass, bronze or steel.

10. Process for manufacturing a golf club head according to any one of the preceding claims, characterized in that the reinforcing piece (200) comprises a reinforcing wall (9) and a part (94) extending laterally and partly forming at least the neck of the head.

11. Process for manufacturing a golf club head according to claim 10, characterized in that the reinforcing wall (9) is made of an aluminium moulding and the steel part (94) is connected and welded to or embedded in the reinforcing wall (9).

12. Golf club head preferably of the wood type comprising a peripheral shell (3) and a neck (2) extending laterally, the shell (3) being formed of an assembly of walls (5,6,7,8) made of low modulus injected plastic material : an upper wall (5), a lower wall (6), a peripheral wall (7) and a front wall (8) forming the striking face (80) of the head, the internal face of the said front wall (8) resting on the front face (900) of an internal reinforcing wall (9) made of a high modulus material, the reinforcing wall being part of a reinforcing part (200) which is extended laterally by a tubular part (94) forming at least part of the neck (2) of the head.

13. Golf club head according to claim 12, characterized in that the reinforcing part (200) is made of metal or resin filled with glass fibre or the like.

14. Golf club head according to claim 13, characterized in that the reinforcing wall (9) is made of aluminium and the tubular part (94) is made of steel.

15. Golf club head preferably of the wood type comprising a peripheral shell (3) and a neck (2) extending laterally, the shell (3) being formed by an assembly of walls (5,6,7,8) made of a low modulus injected plastic material : an upper wall (5), a lower wall (6), a peripheral wall (7) and a front wall (8) forming the striking face (80) of the head, the internal face of the said front wall (8) resting on the front face (900) of an internal reinforcing wall (9) made of a high modulus material, and an inertia balance weight (10) made of a high density material being retained in the internal cavity (11) by one of the walls (5,6,7,8).

16. Golf club head according to claim 15, characterized in that the inertia balance weight (10) is retained by the peripheral wall (7) which includes a retaining projection (70) enclosing the said balance weight at least partially.

17. Golf club head according to any one of claims 12 to 16, characterized in that the reinforcing wall (9) includes at least one protuberance (93a, 93b) projecting at least partly outside the lower wall (6) of the shell (3).

18. Golf club head according to any one of claims 12 to 17, characterized in that the shell (3) is made of polyamide, polypropylene or ABS.

## Patentansprüche

1. Verfahren zur Herstellung eines Golfschlägerkopfes, der eine periphere Schale (3) aufweist, die aus einer Gesamtheit von Wanden (5, 6, 7, 8) gebildet ist, und der durch Einspritzung eines Kunststoffmaterials (M1) hergestellt ist, das einen inneren Hohlraum (11) bildet, der zumindest eine innere Einlage (10, 100, 200) umschließt, die immobilisiert durch eine teilweise Ummantelung aus Kunststoffmaterial der Schale (3) gehalten ist, wobei
- man bei dem Verfahren vor dem Einspritzschritt der Schale (3) eine Gesamtheit in der Form anordnet und immobilisiert, die einen schmelzbaren Kern (13), der aus einem zweiten Material (M2) hergestellt ist, das einen Schmelzpunkt aufweist, der geringer ist als der Schmelzpunkt des Kunststoffmaterials (M1), und die Einlage (10, 100, 200) aufweist, die fest mit dem schmelzbaren Kern verbunden ist;
- man danach die Einspritzung des Kunststoffmaterials (M1) in den zwischen den Wanden der Form und der Gesamtheit freigelassenen Raum durchführt, um den schmelzbaren Kern (13) und vollkommen oder teilweise den freien Teil der Einlage (10, 100, 200) zu ummanteln;
- man schließlich vollkommen oder teilweise den schmelzbaren Kern eliminiert, um zu erlauben, ein inneres Volumen freizugeben, um den inneren Hohlraum (11) zu bilden.

2. Verfahren zur Herstellung eines Golfschlägerkopfes gemäß Anspruch 1, dadurch gekennzeichnet, daß der freie Teil der Einlage (10, 200) eine Schulter (90) oder einen Vorsprung (24) aufweist, der erlaubt, die feste Verbindung der Einlage durch das eingespritzte Kunststoffmaterial (M1) mit der Schale (3) zu begünstigen.

3. Verfahren zur Herstellung eines Golfschlägerkopfes gemäß Anspruch 1 oder 2, dadurch gekennzeichnet, daß die Einlage ein Widerstandsteil (200) ist, das eine Widerstandswand (9) aufweist, die vor dem Einspritzschritt auf der vorderen Seite (14) des schmelzbaren Kerns (13) befestigt ist, um hauptsächlich die vordere Wand (8) der Schale (3) nach dem Einspritzschritt zu verstärken.

4. Verfahren zur Herstellung eines Golfschlägerkopfes gemäß Anspruch 1 oder 2, dadurch gekennzeichnet, daß die Einlage ein Gußzapfen (10, 100) ist, der mit einer der Seiten (14, 15, 16, 17) des schmelzbaren Kerns (13) vor dem Einspritzschritt fest verbunden worden ist, um fest mit einer der Wände (5, 6, 7, 8) der Schale (3) nach dem Einspritzschritt verbunden zu werden.

5. Verfahren zur Herstellung eines Golfschlägerkopfes gemäß Anspruch 4, dadurch gekennzeichnet, daß der schmelzbare Kern (13) zumindest eine Aufnahme (21, 22) aufweist, in der der Gußzapfen (10) gehalten ist, wobei die Aufnahme Ausmaße aufweist, die zumindest stellenweise größer als diejenigen des Gußzapfens (10) sind, damit es einen Raum (e) zwischen dem Gußzapfen (10) und den Wänden der Aufnahme gibt, der dazu bestimmt ist, durch das erste Kunststoffmaterial (M1) bei dem Einspritzschritt ausgefüllt zu werden.

6. Verfahren zur Herstellung eines Golfschlägerkopfes gemäß irgendeinem der vorangehenden Ansprüche, dadurch gekennzeichnet, daß man in einem zusätzlichen Schritt in den inneren Hohlraum (11), der freigelassen worden ist, ein Füllmaterial (12) von geringer Dichte fließen läßt.

7. Verfahren zur Herstellung eines Golfschlägerkopfes gemäß irgendeinem der vorangehenden Ansprüche, dadurch gekennzeichnet, daß der schmelzbare Kern aus einer Legierung aus Zinn, Blei und Wismut hergestellt ist.

8. Verfahren zur Herstellung eines Golfschlägerkopfes gemäß irgendeinem der vorangehenden Ansprüche, dadurch gekennzeichnet, daß die Schale (3) aus einem Material (M1), wie z.B. Polyamid, Polypropylen oder ABS (Acrynitrilebutadienestyrol) hergestellt ist.

9. Verfahren zur Herstellung eines Golfschlägerkopfes gemäß Anspruch 4 oder 5, dadurch gekennzeichnet, daß der Gußzapfen (10) aus Messing, Bronze oder Stahl hergestellt ist.

10. Verfahren zur Herstellung eines Golfschlägerkopfes gemäß irgendeinem der vorangehenden Ansprüche, dadurch gekennzeichnet, daß das Widerstandsteil (200) eine Widerstandswand (9) und einen Teil (94) aufweist, der sich seitlich verlängert und zumindest teilweise den Hals des Kopfes bildet.

11. Verfahren zur Herstellung eines Golfschlägerkopfes gemäß Anspruch 10, dadurch gekennzeichnet, daß die Widerstandswand (9) durch Formen aus Aluminium gebildet ist und daß der Teil (94) aus Stahl angesetzt und verschweißt oder eingelassen an der Widerstandswand (9) ist.

12. Golfschlägerkopf, vorzugsweise vom Holztyp, der eine periphere Schale (3) und einen Hals (2) aufweist, der sich seitlich erstreckt, wobei die Schale (3) durch eine Gesamtheit von Wänden (5, 6, 7, 8) aus einem eingespritzten Kunststoffmaterial mit einem geringen Modul gebildet ist: einer oberen Wand (5), einer unteren Wand (6), einer peripheren Wand (7) und einer vorderen Wand (8), die die Schlagseite (80) des Kopfes bildet, wobei die innere Wand der vorderen Wand (8) in Abstützung auf der vorderen Seite (900) einer internen Widerstandswand (9) aus einem Material mit einem hohen Modul ist und wobei die Widerstandswand ein Teil eines Widerstandsteiles (200) ist, das sich seitlich durch einen röhrenförmigen Teil (94) verlängert, der zumindest teilweise den Hals (2) des Kopfes bildet.

13. Golfschlägerkopf gemäß Anspruch 12, dadurch gekennzeichnet, daß das Widerstandsteil (200) metallisch oder aus einem mit Glasfasern oder anderen Fasern versehenen Harz ist.

14. Golfschlägerkopf gemäß Anspruch 13, dadurch gekennzeichnet, daß die Widerstandswand (9) aus Aluminium und der röhrenförmige Teil (94) aus Stahl ist.

15. Golfschlägerkopf, vorzugsweise vom Holztyp, der eine periphere Schale (3) und einen Hals (2) aufweist, der sich seitlich erstreckt, wobei die Schale (3) durch eine Gesamtheit von Wänden (5, 6, 7, 8) aus einem eingespritzten Kunststoffmaterial mit einem geringen Modul gebildet ist: einer oberen Wand (5), einer unteren Wand (6), einer peripheren Wand (7) und einer vorderen Wand (8), die die Schlagseite (80) des Kopfes bildet, wobei die innere Seite der vorderen Wand (8) in Abstützung auf der vorderen Seite (900) einer internen Widerstandswand (9) aus einem Material mit einem hohen Modul ist und ein Trägheitsgußzapfen (10) aus einem Material mit großer Dichte in dem inneren Hohlraum (11) durch eine der Wände (5, 6, 7, 8) gehalten ist.

16. Golfschlägerkopf gemäß Anspruch 15, dadurch gekennzeichnet, daß der Trägheitsgußzapfen (10) durch die periphere Wand (7) gehalten ist, die einen Haltevorsprung (70) aufweist, der zumindest teilweise den Gußzapfen umhüllt.

17. Golfschlägerkopf gemäß irgendeinem der Ansprüche 12 bis 16, dadurch gekennzeichnet, daß die Widerstandswand (9) zumindest einen Vorsprung (93a, 93b) aufweist, der zumindest teilweise aus der unteren Wand (6) der Schale (3) vorsteht.

18. Golfschlägerkopf gemäß irgendeinem der Ansprüche 12 bis 17, dadurch gekennzeichnet, daß die Schale (3) aus Polyamid, aus Polypropylen oder aus ABS ist.
